Europäisches Patentamt

European Patent Office

Office européen des brevets

(11) Publication number: **0 283 638 B1**

# EUROPEAN PATENT SPECIFICATION

(45) Date of publication of patent specification: **08.04.92**    (51) Int. Cl.⁵: **A01F 29/12**, A01D 87/10,
F04D 23/00

(21) Application number: **88100226.5**

(22) Date of filing: **11.01.88**

(54) **Blower and discharge spout assembly.**

(30) Priority: **23.03.87 US 29109**

(43) Date of publication of application:
**28.09.88 Bulletin 88/39**

(45) Publication of the grant of the patent:
**08.04.92 Bulletin 92/15**

(84) Designated Contracting States:
**AT CH DE ES FR GB IT LI NL SE**

(56) References cited:
**EP-A- 0 171 491**
**CH-A- 319 466**
**DE-C- 448 675**
**FR-A- 1 206 859**

**Publication of Karl Mengele & Söhne, Günz-
burg, DE,
"Hochleistungs-Scheibenrad-Feldhächsler
SH25" LP614/5/1185/5216**

(73) Proprietor: **DEERE & COMPANY**
**1 John Deere Road**
**Moline, Illinois 61265(US)**

(72) Inventor: **deBuhr, Harold Eugene**
**3 Carter Court Lane**
**Ottumwa Iowa 52501(US)**
Inventor: **Wilkes, Raymond Steele**
**11 Schwartz Drive**
**Ottumwa Iowa 52501(US)**

(74) Representative: **Feldmann, Bernhard et al**
**DEERE & COMPANY European Office Patent**
**Department Steubenstrasse 36-42 Postfach**
**100862**
**W-6800 Mannheim 1(DE)**

Rank Xerox (UK) Business Services

# Description

This invention relates to a blower and discharge spout assembly for an ensilage harvester including a rotary blower with a cylindrical housing which has an outlet for delivering crop tangentially in relation to the upstream side of the outlet and a discharge spout which is connected to the outlet.

Today's ensilage harvesters (Publication of Karl Mengele & Söhne, Günzburg, DE, "Hochleistungs-Scheibenrad-Feldhäcksler SH 25", LP 614/5/1185/5216) are provided with arcuately curved discharge spouts for discharging crop material into a wagon. These spouts comprise a first upwardly extending spout inlet section coupled to the blower or impeller housing and a second arcuately curved spout outlet section. Wear on the spout is concentrated in areas where crop material impinges upon the outer wall surface of the curved elbow outlet section and changes direction in a sharp angle. Failure of the spout in these localized areas necessitates replacement of wear plates or of an entire spout component.

The blower or impeller housing of this ensilage harvester is provided with an optional feature called "corn-kill-set" having an arcuate beater comb cooperating with five additional discharge blades with outer ends disposed in close proximity to the arcuate comb portion. This feature is used for cracking kernels and not for minimizing wear in the area where crop initially impinges upon the internal surface of the spout.

It is also known to have a deflector in a blower and discharge assembly (FR-A-1 206 859) which can be shifted into two positions for varying the size of the discharge opening. For the harvest of green fodder the deflector is shifted into its first position where a first part partly encircles the outer ends of rotating impeller finger blades and a second part extends tangentially into the discharge spout. In the second position used for the harvest of hay or straw the deflector is positioned more distally to the outer ends of the impeller.

It is an object of the present invention to minimize wear in that area where crop material impinges upon the curved outlet section.

According to the present invention the deflector is provided in the vicinity of where the inner spout section wall joins the cylindrical wall, is mounted transversely across the housing and includes an arcuate surface forming a continuation of the cylindrical wall of the housing and located such that crop material discharged through the discharge opening is directed along a path which is approximately tangential to a beginning end of an elbow outer arcuate wall surface of the curved elbow outlet section.

Therefore the blower and discharge spout assembly is designed to direct crop material toward a curved spout surface so that the material engages the surface at a small angle so that the material flows or slides with a low normal force. Wear on the spout is thereby minimized.

An embodiment of the invention will now be described with reference to the accompanying diagrammatic drawings in which:

Fig. 1    is a schematic side elevational view of a blower and discharge spout assembly showing a typical prior art design; and

Fig. 2    is a schematic side elevational view of a blower and discharge spout assembly of the present invention.

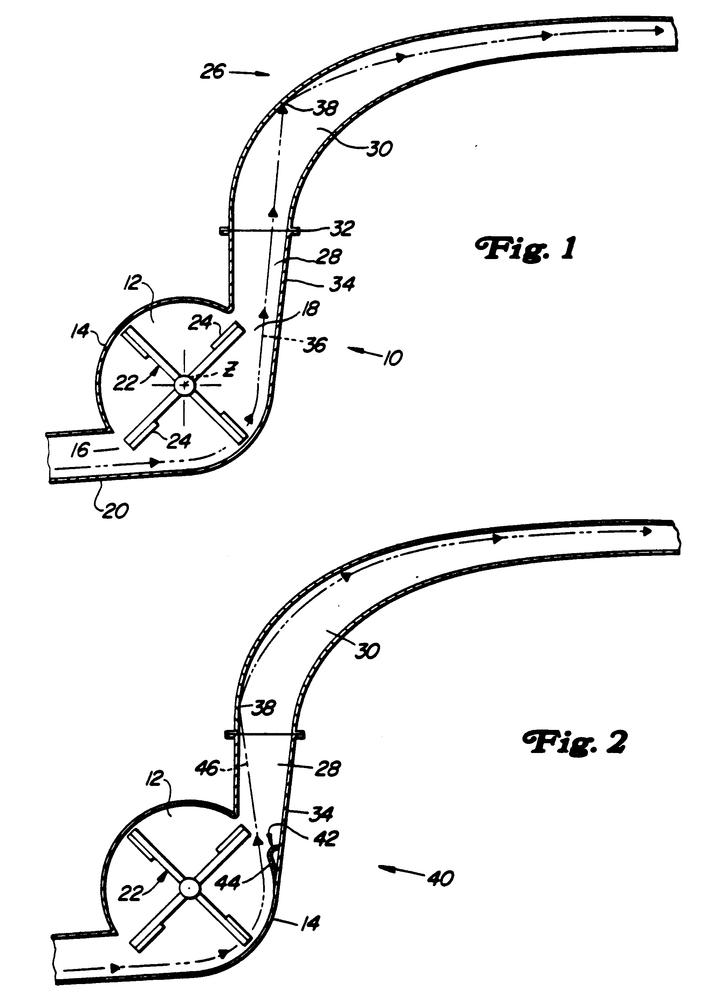

Referring now to Fig. 1, there is shown a blower and discharge spout assembly 10 which is representative of the prior art. Specifically, the assembly 10 includes a blower housing 12 including a cylindrical wall 14 having inlet and discharge openings 16 and 18 respectively opening horizontally and vertically formed substantially 180° apart within lower left and upper right quadrants of the housing, as viewed in Fig. 1. Provided in the housing 12 for receiving crop material delivered to the inlet opening 16 via a substantially horizontal conduit 20 and discharging the material through the opening 18 is an impeller 22 supported, by bearings (not shown) located in opposite end walls of the housing 12, for rotation about an axis Z and including a plurality of blades or paddles 24 having radially outer ends disposed close to the cylindrical wall 14.

A discharge spout 26 is coupled to the housing wall 14 for conveying crop material upwardly and away from the discharge opening 18 and includes a relatively straight first section 28 and an arcuately curved second section or elbow 30 interconnected at a joint 32. Specifically, the first section 28 is oriented at a slight angle from the vertical and includes a right wall 34 extending substantially tangentially to the housing wall 14 and to an inner arcuate wall surface of the elbow 30. Crop material discharged into the spout section 28 by the impeller 22 is delivered tangentially in relation to the upstream side of the outlet 18 and follows a path 36 which is parallel to the wall 34 (i.e. the side of the inlet portion 28 associated with the upstream side of the outlet 18) and intersects an arcuately curved, leftward wall surface area 38 of an outer arcuate wall surface of the second spout section or elbow 30 at a relatively steep angle. Thus, the spout surface area 38 will become worn due to the force of material impinging thereagainst.

Referring now to Fig. 2, there is shown a blower and discharge spout assembly 40 which is constructed in most respects like the previously described assembly 10 and is given like reference numerals. Specifically, the assembly 40 includes the impeller or blower 22, housing 12 and discharge spout sections 28 and 30.

The assembly 40 differs from the assembly 10 in that in the vicinity of where the spout section wall 34 joins the housing wall 14, there is provided a blower deflector 42 which extends transversely across and is joined to the wall 34 and the ends of the housing 12. The deflector 42 includes an arcuate wall 44 which forms a short extension of the inner surface of the cylindrical wall 14. The deflector 42 modifies the trajectory of crop material leaving the housing from that described above relative to Fig. 1 so that the material travels along a path 46 that diverges from the wall 34 and intersects the surface area 38 at a very shallow angle (e.g. 13°) and, is thus substantially tangential to a beginning end of the elbow outer arcuate wall surface that includes the arcuately curved surface area 38.

Thus, crop material passing through the discharge spout section 28 flows smoothly along the curvature of outer arcuate wall surface of the discharge spout section or elbow 30.

## Claims

1. Blower and discharge spout assembly (10) for an ensilage harvester including a blower housing (12) having a cylindrical wall (14), an impeller (22) rotatably mounted in the housing (12) and having blades (24) with radially outer ends disposed in close proximity to the cylindrical wall (14), a discharge opening (18) formed in the cylindrical wall (14), a discharge spout (26) having a first upwardly extending spout section (28) for receiving crop material discharged from the housing (12) through the discharge opening (18), including an inner spout section wall (34) extending substantially tangentially to the housing (12), and being coupled to a curved elbow outlet section (30), and a deflector (42) provided in the vicinity of where the inner spout section wall (34) joins the cylindrical wall (14), extending transversely across the housing (12) and including an arcuate surface (44) forming a continuation of the cylindrical wall (14) of the housing (12), said deflector being located such that crop material discharged through the discharge opening (18) is directed along a path (46) which is approximately tangential to a beginning end of an elbow outer arcuate wall surface of the curved elbow outlet section (30).

## Revendications

1. Ensemble (10) à soufflante et tubulure de décharge pour une moissonneuse d'ensilage comprenant un carter (12) de la soufflante, possédant une paroi cylindrique (14), un rotor (22) monté rotatif dans le carter (12) et comportant des pales (24) possédant des extrémités, extérieures du point de vue radial, disposées à proximité directe de la paroi cylindrique (14), une ouverture de décharge (18) ménagée dans la paroi cylindrique (14), une tubulure de décharge (26) possédant une première section (28) qui s'étend vers le haut et sert à recevoir la récolte évacuée du carter (12) par l'intermédiaire de l'ouverture de décharge (18), comprenant une paroi intérieure (34) de la section de décharge, qui s'étend sensiblement tangentiellement au carter (12) et est raccordée à une section de sortie incurvée en forme de coude (30), et un déflecteur (42) prévu au voisinage de l'emplacement où la paroi intérieure (34) de la section de la tubulure rejoint la paroi cylindrique (14), et qui s'étend transversalement en travers du carter (12) et comprend une surface courbe (44) constituant un prolongement de la paroi cylindrique (14) du carter (12), ledit déflecteur étant situé de telle manière que la récolte refoulée par l'ouverture de décharge (18) est détectée le long d'un trajet (46), qui est approximativement tangentiel à une extrémité de départ d'une surface de paroi courbe extérieure en forme de coude de la section de sortie incurvée en forme de coude (30).

## Patentansprüche

1. Gebläse- und Abwurfschacht-Anordnung (10) für einen Feldhäcksler, der ein Gebläsegehäuse (12), das eine zylindrische Wand (14) hat, ein Flügelrad (22), das drehbar in dem Gehäuse (12) montiert ist und Flügel (24) aufweist, deren radial äußeren Enden nahe der zylindrischen Wand (14) liegen, eine Auswurföffnung (18), die in der zylindrischen Wand (14) vorgesehen ist, einen Abwurfschacht (26), der einen ersten, sich nach oben erstreckenden Schachtabschnitt (28) zur Aufnahme von Erntegut, das von dem Gehäuse (12) durch die Auswurföffnung (18) ausgeworfen wird, der eine innere Schachtabschnittwand (34) aufweist, welche sich im wesentlichen tangential zum Gehäuse (12) erstreckt, und der mit einem ellbogenförmig gekrümmten Auslaßabschnitt (30) gekuppelt ist, sowie einen Ablenkteil (42) aufweist, der in der Nähe der Stelle angeordnet ist, an der die innere Schachtabschnittwand (34) in die zylindrische Wand (14) übergeht, sich quer über das Gehäuse (12) erstreckt und eine gekrümmte Oberfläche (44) aufweist, welche eine Fortsetzung der zylindrischen Wand (14) des Gehäuses (12) bildet, wobei der genannte Ablenkteil so angeordnet ist, daß das Erntegut, welches durch die Auswurföffnung (18) ausgeworfen wird, entlang einer Bahn (46) abgelenkt wird, die annähernd tangential zu einem Anfangsende einer äußeren ellbogenförmig gekrümmten Wandfläche des ellbogenförmig gekrümmten Auslaßabschnittes (30) verläuft.

Fig. 1

Fig. 2